# EUROPÄISCHE PATENTSCHRIFT

(11) **EP 1 596 104 B1**
(45) Veröffentlichungstag und Bekanntmachung des Hinweises auf die Patenterteilung: **21.01.2009**
(21) Anmeldenummer: 05009198.2
(22) Anmeldetag: 27.04.2005
(51) Int. Cl.: F16H 61/28

(54) **Vorrichtung zum Ansteuern einer Mehrzahl von hydraulischen Schaltzylindern sowie Hydraulikversorgungssystem für ein Doppelkupplungsgetriebe**
Control device for a plurality of shift cylinders and hydraulic supply system for a dual clutch transmission
Dispositif de commande de plusieurs cylindres de passage et système d'alimentation hydraulique pour une boite à double embrayages

(30) Priorität: 15.05.2004 DE 102004024310; 03.09.2004 DE 102004042641; 22.12.2004 DE 102004062984
(43) Veröffentlichungstag der Anmeldung: 16.11.2005
(73) Patentinhaber: LuK Lamellen und Kupplungsbau Beteiligungs KG, 77815 Bühl (DE)
(72) Erfinder: Müller, Eric, 67657 Kaiserslautern (DE); Homm, Manfred, 77815 Bühl-Neusatz (DE)

(56) Entgegenhaltungen:
- EP-A2- 1 420 185
- DE-A1- 10 125 172
- DE-C1- 4 432 850
- JP-A- 8 109 905

## Beschreibung

Die Erfindung betrifft eine Vorrichtung zum Ansteuern einer Mehrzahl von hydraulischen Schaltzylindern, insbesondere Schaltzylindern zum Schalten von Gängen eines Doppelkupplungsgetriebes. Die Erfindung betrifft weiter ein Hydraulikversorgungssystem für ein Doppelkupplungsgetriebe, enthaltend eine solche Vorrichtung.

Aus der DE 101 439 29 A1 ist eine elektrohydraulische Getriebesteuervorrichtung bekannt, mit der an Kupplungen, Bremsen und/oder Schaltmechanismen eines Automatgetriebes vorhandene Schaltzylinder mit Hydraulikdruck beaufschlagt werden können. Die Bauteile der Getriebesteuervorrichtung sind an einem Modulkörper befestigt, in dem Strömungspfade gebildet sind. An dem Modulkörper angebrachte, beispielsweise als Schieberventile ausgebildete Steuerventile steuern Hydraulikflüssigkeit durch die Strömungspfade. Die Steuerventile werden von Magnetsteuerrrentilen gesteuert, die ebenfalls am Modulkörper angebracht sind.

Der Aufbau solcher Getriebesteuervorrichtungen ist verhältnismäßig kompliziert. Insbesondere sind zur Ansteuerung der Stellzylinder eine Vielzahl von Steuer- bzw. Schieberventilen und beispielsweise elektromagnetisch betätigter Steuereinrichtungen erforderlich.

Die JP 08109905 A zeigt einen mehrstufig bidirektional betätigbaren Schaltzylinder, in dem mehrere Kammern mit Systemdruck oder mit einem Rücklauf verbindbar sind.

Die gattungsbildende DE 44 32 850 C1 zeigt eine Anordnung zum Steuern eines Gangwechselgetriebes, bei dem zwei hydraulische Stellglieder wechselweise mittels eines einzigen elektromagnetischen Steuerventils in zwei stationäre und zwei instationäre Schaltzustände schaltbar sind.

Die DE 101 25 172 A1 zeigt eine hydraulische Schaltsteuervorrichtung für ein mehrgängiges Zahnräderwechseigetriebe, bei dem zwei parallel geschaltete Schieberventile jeweils wechselweise eine Druckkammer eines von einem Schaltventil freigeschalteten Schaltzylinders mit Systemdruck versorgen.

Die nicht vorveröffentlichte EP 1 420 185 A2 zeigt einen Kraftfahrzeug-Antriebsstrang mit einer Getriebesteuerung, bei der mehrere hydraulische Schaltzylinder zum Schalten von Gängen von einem ersten Schieberventil mit einem Eingang mit Systemdruck, zwei Ausgängen zu den Schieberventilen und einem Rücklaufausgang versorgt werden, wobei die beiden Ausgänge wahlweise mit Systemdruck oder mit dem Rücklauf verbindbar sind.

Der Erfindung liegt die Aufgabe zugrunde, eine in ihrem Aufbau einfache Vorrichtung zum Ansteuern einer Mehrzahl von hydraulischen Schaltzylindern zu schaffen, insbesondere zur Ansteuerung von Schaltzylindern zum Schalten von Gängen eines Doppelkupplungsgetriebes.

Eine bekannte Vorrichtung zum Ansteuern einer Mehrzahl von hydraulischen Schaltzylindem, insbesondere Schaltzylindern zum Schalten von Gängen eines Doppelkupplungsgetriebes enthält: ein erstes Schieberventil mit einem mit Steuerdruck beaufschlagbaren Steuereingang, einem mit Systemdruck beaufschlagbaren Systemdruckeingang, zwei Ausgängen und wenigstens einem Rücklaufausgang, wobei in Abhängigkeit von dem am Steuereingang liegenden Druck wahlweise der eine Ausgang mit dem Systemdruckeingang und der andere Ausgang mit dem Rücklaufausgang verbunden ist, und eine an die Ausgänge des Schieberventils angeschlossene Ventileinrichtung, mittels der die Schaltzylinder selektiv betätigbar sind.

Durch das erste Schieberventil, das im Allgemeinen als ein 4/3-Wegeventil ausgebildet ist, und der an dieses Schieberventil angeschlossenen Ventileinrichtung werden unterschiedliche einfache Möglichkeiten zum Aufbau der erfindungsgemäßen Vorrichtung eröffnet.

Bei einer Ausführungsform der Vorrichtung ist die Ventileinrichtung durch Schieberventile gebildet mit Eingängen und Ausgängen und Schiebern, die abhängig von einer Beaufschlagung mit Steuerdruck in eine erste oder zweite Stellung bewegbar sind, wobei jedem Eingang eines Schieberventils zwei Ausgänge zugeordnet sind, deren einer in der ersten Stellung des Schiebers und deren anderer in der zweiten Stellung des Schiebers mit dem Eingang verbunden ist, welche Schieberventile in Stufen zu einer Kaskade derart hintereinander angeordnet sind, dass ein Eingang eines Schieberventils einer nachgeordneten Stufe mit einem Ausgang eines Schieberventils der vorhergehenden Stufe verbunden ist, wobei das erste Schieberventil die erste Stufe bildet und die Ausgänge der Schieberventile der letzten Stufe mit je einem Schaltzylinder verbunden sind, und Steuereinrichtungen vorgesehen sind, von denen je eine den Schieberventilen einer Stufe zugeordnet ist, so dass alle Schieberventile einer Stufe gleichzeitig mit Steuerdruck beaufschlagbar sind.

Damit wird erreicht, dass nicht jedem Schaltzylinder eine eigene Steuereinrichtung zugeordnet sein muss, so dass mit einer Anzahl von Steuereinrichtungen, die lediglich der Anzahl von Stufen entspricht, selektiv jeweils einer der hydraulischen Schaltzylinder schalt- bzw. betätigbar ist, deren Anzahl größer als die der Steuereinrichtungen ist.

Dadurch enthält die zweite Stufe der Kaskade ein Schieberventil mit zwei Eingängen und vier Ausgängen und eine dritte Stufe zwei Schieberventile mit je zwei Eingängen und vier Ausgängen usw. Auf diese Weise lassen sich mit n Steuereinrichtungen 2" Schaltzylinder selektiv betätigen.

Bei einer Vorrichtung zum Ansteuern einer Mehrzahl von hydraulischen Schaltzylindern zum Schalten von Gängen eines Doppelkupplungsgetriebes sind die mit dem einen Eingang des Schieberventils der zweiten Stufe verbindbaren Ausgänge der dritten Stufe mit Schaltzylindern verbunden, mit denen eine erste Gruppe von Gängen des Doppelkupplungsgetriebes schaltbar ist, und sind die mit dem anderen Eingang des Schieberventils der zweiten Stufe verbindbaren Ausgänge der dritten Stufe mit Schaltzylindern verbunden, mit denen eine zweite Gruppe von Gängen schaltbar ist.

Bei einer Ausführungsform der vorgenannten Vorrichtung ist die Steuereinrichtung zum Betätigen des Schieberventils der zweiten Stufe durch einen Anschluss einer Steuerkammer des Schieberventils an eine Hydraulikleitung gebildet, über die eine der Kupplungen des Doppelkupplungsgetriebes durch Druckbeaufschlagung betätigbar ist.

Bei einer erfindungsgemäßen Ausführungsform der Vorrichtung sind je zwei Schaltzylinder gegensinnig wirkend zu einer Schaltbaugruppe für ein Schaltglied zusammengefasst, enthält die Ventileinrichtung ein mit Steuerdruck beaufschlagbares Mehrwegeventil mit je einem der Schaltzylinder einer Schaltbaugruppe zugeordneten Einzelausgängen und einem der jeweils anderen der Schaltzylinder der Betätigungsbaugruppen gemeinsam zugeordneten Sammelausgang, und das Mehrwegventil leitet je nach Stellung des ersten Schieberventils den Systemdruck selektiv auf einen der Einzelausgänge und verbindet dabei alle anderen Schaltzylinder mit dem Rücklaufausgang oder verbindet selektiv einen der Einzelausgänge mit dem Rücklaufausgang und beaufschlagt dabei alle anderen Ausgänge mit dem Systemdruck.

Vorteilhaft sind wenigstens einige der Steuereinrichtungen durch elektromagnetisch betätigbare Steuerventile gebildet.

Dabei ist bevorzugt eine Vorsteuerdruckleitung über eine Drossel mit einer Verbindungsleitung zwischen einem Steuerventil und einer Steuerkammer eines Schieberventils verbunden.

Vorteilhafterweise enthält die vorgenannte Ventileinrichtung ein Drehschieberventil, dessen Drehschieber selektiv einen mit einem Ausgang des ersten Schieberventils verbundenen Eingang mit einem der Einzelausgänge verbindet und dessen Sammelausgang gleichzeitig den anderen, mit dem anderen Ausgang des ersten Schieberventils verbundenen Eingang des Drehschieberventils bildet.

Ein Hydraulikversorgungssystem für ein Doppelkupplungsgetriebe mit einer Vorrichtung der vorgenannten Art enthält eine von einer Pumpe mit Druck beaufschlagbare Leitung, die an ein Druckregelventil angeschlossen ist, das einen Steuerdruckanschluss zum Anschluss einer mit den Steuereinrichtungen verbundenen Steuerdruckleitung und einen Rücklaufanschluss aufweist, der über eine durch einen Kühler führende Kühlleitung mit einer Rücklaufleitung verbunden ist, eine Bypassleitung, die die Kühlleitung mit der Rücklaufleitung verbindet, und ein in der Bypassleitung angeordnetes Druckbegrenzungsventil, das den Durchströmquerschnitt der Bypassleitung bei zunehmendem Staudruck am Kühler zunehmend öffnet.

Mit Vorteil wird zumindest ein Teil des durch die Rücklaufleitung strömenden Hydraulikfluids zur Kühlung der Kupplungen verwendet.

Die Erfindung ist überall einsetzbar, wo eine Mehrzahl von selektiv ansteuerbaren Schaltzylindern, Hydraulikventilen usw. benötigt wird, um den Betrieb nachgeordneter Einheiten zu steuern.

Die Erfindung wird im folgenden anhand schematischer Zeichnungen beispielsweise und mit weiteren Einzelheiten erläutert.

In den Figuren stellen dar:
Fig. 1 eine Prinzipsskizze eines Doppelkupplungsgetriebes mit Steuereinrichtung,
Fig. 2 einen Schaltplan eines Hydrauliksystems zur Betätigung eines Doppelkupplungsgetriebes,
Fig. 3 einen Schaltplan eines Hydrauliksystems zur Betätigung zur Betätigung eines Doppelkupplungsgetriebes,
Fig. 4 einen Hydraulikplan einer abgeänderten Ausführungsform einer erfindungsgemäßen Vorrichtung,
Fig. 5 ein Drehventil in vier verschiedenen Stellungen,
Fig. 6 einen ersten Zustand von Schaltbaugruppen unter Ansteuerung mit dem Drehventil gemäß Fig. 5,
Fig. 7 einen gegenüber der Fig. 6 abgeänderten Schaltzustand des Systems, und
Fig. 8 eine der Fig. 2 entsprechende Darstellung eines Schaltplans unter Verwendung des Drehventils.

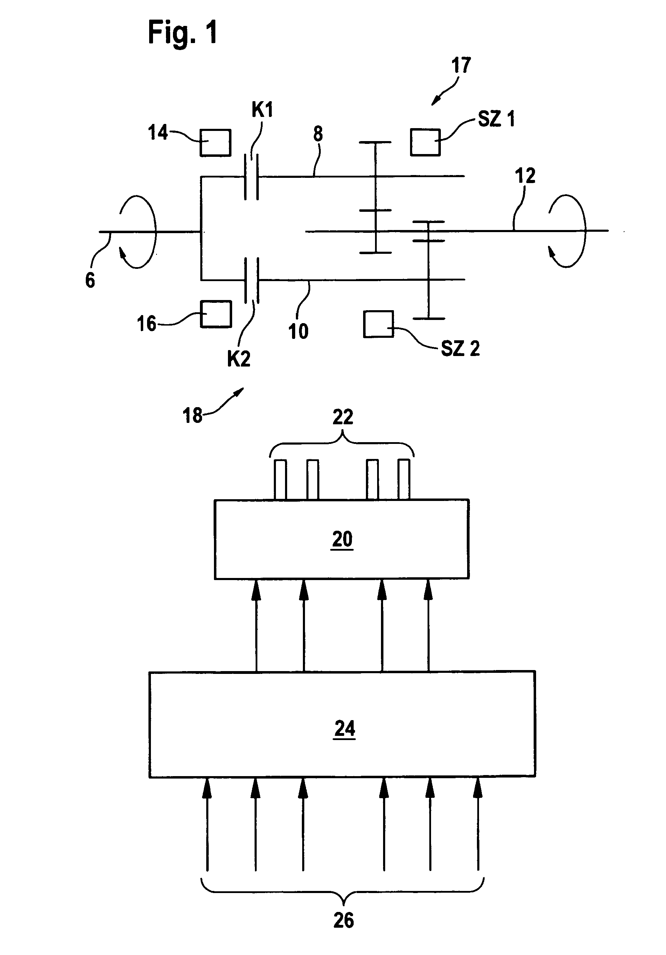

Gemäß Fig. 1 weist ein Doppelkupplungsgetriebe eine beispielsweise von einer Brennkraftmaschine angetriebene Antriebswelle 6 auf, die mit zwei Eingangswellen 8 und 10 drehfest verbunden ist. Der Drehmomentfluss von der Antriebswelle 6 in die Eingangswellen 8 und 10 ist über je eine Kupplung K1 und K2 wahlweise steuerbar. Zwischen der Eingangswelle 8 und einer Ausgangswelle 12 sind über Radpaarungen, von denen nur eine dargestellt ist, verschiedene Übersetzungen schaltbar. Ebenso sind zwischen der Eingangswelle 10 und der Ausgangswelle 12 verschiedene Radpaarungen schaltbar, von denen nur eine dargestellt ist. Zum Betätigen der Kupplungen K1 und K2 sind Stellzylinder 14 und 16 vorgesehen. Zum Schalten der Radpaarungen, beispielsweise zum Herstellen einer drehfesten Verbindung zwischen dem auf der Eingangswelle 8 oder 10 angeordneten Rad mit der jeweiligen Eingangswelle 8 oder 10, das mit einem jeweiligen, mit der Ausgangswelle ständig drehfest verbundenen Rad kämmt, sind Stellzylinder SZ1 und SZ2 vorgesehen.

Die auf der Eingangswelle 8 angeordneten Räder sind beispielsweise Räder, mit denen jeweils ein gerader Gang sowie ein Rückwärtsgang geschaltet wird. Mit der Eingangswelle 10 sind Räder verbunden, mit denen jeweils ein ungerader Gang geschaltet wird. Somit besteht das Doppelkupplungsgetriebe aus zwei insgesamt mit 17 und 18 bezeichneten Teilgetrieben, die mit einer gemeinsamen Ausgangswelle 12 arbeiten und von denen das eine beispielsweise die geraden Gänge und den Rückwärtsgang und das andere die ungeraden Gänge enthält.

Aufbau und Funktion eines solchen Doppelkupplungsgetriebes sind an sich bekannt und werden daher nicht erläutert.

Zur Ansteuerung der Stell- und Schaltzylinder dient eine Elektrohydraulikbaugruppe 20, die eine Hydraulikdruckversorgung, Hydraulikleitungen, Ventile zum Schalten der Leitungen und elektrisch betätigbare Ventile enthält.

Hydraulische Ausgangsleitungen 22 der Elektrohydraulikbaugruppe 20 sind mit den Stellzylindern verbunden. Elektrische Eingänge der Elektrohydraulikbaugruppe, die mit Magneten von Magnetventilen verbunden sind, sind mit Ausgängen einer elektronischen Steuereinrichtung 24 verbunden, deren Eingänge 26 mit Sensoren verbunden sind, deren Ausgangssignale die Betätigung des Doppelkupplungsgetriebes entsprechend vorbestimmten, in der Steuereinrichtung 24 gespeicherten Programmen bestimmen.

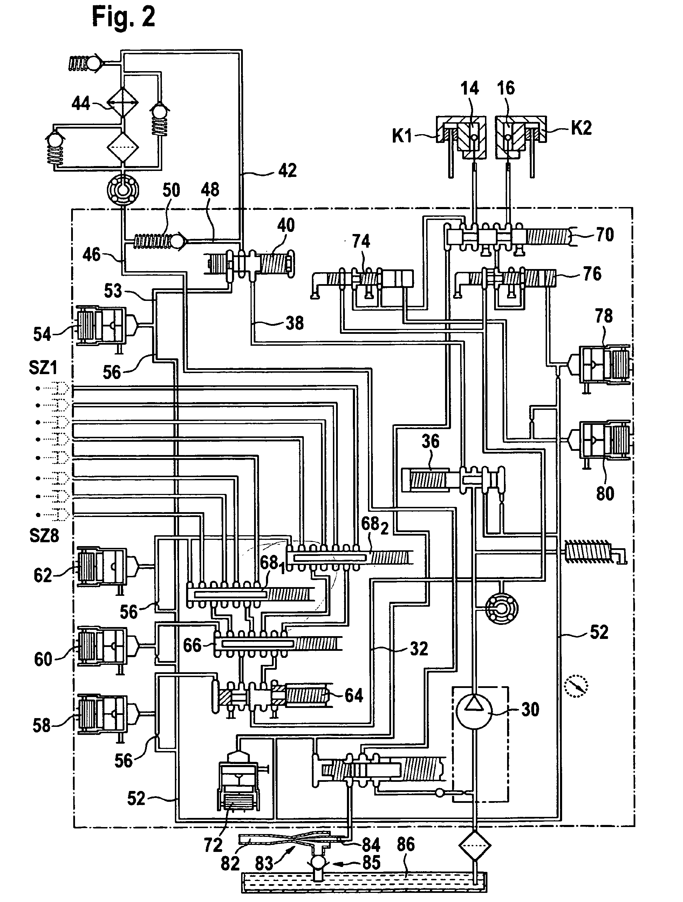

Fig. 2 zeigt eine bekannte Ausführungsform der Elektrohydraulikbaugruppe 20, wobei nachfolgend nur die wesentlichen Komponenten der Elektrohydraulikbaugruppe erläutert werden.

Gemäß Fig. 2 erzeugt eine Pumpe 30 in einer Leitung 32 und in einer durch ein Vorsteuerdruckventil 36 geführten Leitung 38 einen Systemdruck, aus dem mittels des Vorsteuerdruckventils 36 in einer Leitung 52 ein Vorsteuerdruck hergeleitet wird. Die Systemdruckleitung 38 ist mit einem Eingang eines Druckregelventils 40 verbunden, das einen Rücklaufauslass und einen Steueranschluss aufweist. An den Rücklaufauslass ist eine Kühlleitung 42 angeschlossen, die zu einem Kühler 44 führt, dessen Auslass an eine Rücklaufleitung 46 angeschlossen ist. Eine Bypassleitung 48 verbindet die Kühlleitung 42 strömungsoberhalb des Kühlers 44 mit der Rücklaufleitung 46. In der Bypassleitung 48 ist ein Druckbegrenzungsventil 50 angeordnet, das zunehmend öffnet, wenn der Druck in der Kühlleitung 42 den Druck in der Rücklaufleitung 46 übersteigt.

Der Steueranschluss des Druckregelventils 40 ist mit einer Leitung 53 verbunden, von der eine Leitung zu einem Steuerdruckventil 54 abzweigt, das bevorzugt als elektromagnetisch betätigtes Proportionalventil ausgebildet ist und die Leitung 53 entsprechend seiner Betätigung mit einem Rücklauf verbindet. Die Leitung 53 ist über eine Drossel 56 mit der Vorsteuerdruckleitung 52 verbunden. Mit Hilfe des Steuerventils 54 wird über das Druckregelventil 40 der Systemdruck eingestellt.

Von der Vorsteuerdruckleitung 52 zweigen verschiedene Leitungen ab, die unter Zwischenanordnung von Drosseln 56 jeweils mit Eingängen von Steuerventilen 58, 60 und 62 verbunden sind und in Steuerkammern von Schieberventilen 64, 66 und 68₁ und 68₂ münden.

Das Steuerventil 58 ist vorzugsweise als elektromagnetisch betätigtes Proportionalventil ausgebildet. Die Steuerventile 60 und 62 sind bevorzugt einfache Schaltventile. Mittels der Steuerventile ist die Vorsteuerdruckleitung 52 jeweils entsprechend dem von den Steuerventilen freigegebenen Querschnitt mit einem Rücklauf verbindbar, so dass der Druck in der jeweiligen Steuerkammer absinkt.

Die Schieberventile enthalten jeweils einen Schieber, der an einer Stirnseite mit hydraulischem Steuerdruck beaufschlagt ist und an der anderen Stirnseite gegen eine Feder arbeitet. Das Schiebergehäuse weist jeweils Einlässe und Auslässe auf, wobei je nach Stellung des Schiebers ein Einlass mit einem von zwei ihm zugeordneten Auslässen verbunden ist. Wie aus der Fig. 2 ersichtlich, weist das Schieberventil 64 zwei Auslässe auf, von denen der linke bei druckloser Steuerkammer mit dem in der Leitung 32 herrschenden Systemdruck beaufschlagt wird und der rechte bei mit entsprechend hohem Steuerdruck beaufschlagter Steuerkammer mit dem Systemdruck beaufschlagt ist. Es versteht sich, dass der von dem Schieberventil jeweils weiter geleitete Druck von der Höhe des Steuerdrucks abhängt. Die beiden Auslässe des Schieberventils 64 sind mit zwei Einlässen des Schieberventils 66 verbunden, das vier Auslässe hat, von denen die beiden linken mit Einlässen des Schieberventils 68₁ verbunden sind und die beiden rechten mit Einlässen des Schieberventils 68₂ verbunden sind. Die Schieberventile 68₁ und 68₂ haben vier Auslässe, von denen die jeweils beiden linken mit dem linken Einlass und die beiden rechten dem rechten Einlass zugeordnet sind. Die insgesamt acht Auslässe der Schieberventile 68₁ und 68₂ sind mit Stellzylindern SZ1 bis SZ8 verbunden, mit denen Gänge des Doppelkupplungsgetriebes (Fig. 1) geschaltet werden.

Die Schieberventile sind somit kaskadenartig in drei Stufen hintereinander angeordnet, wobei das Schieberventil 64 die erste Stufe, das Schieberventil 66 die zweite Stufe und die Schieberventile 68₁ und 68₂ die dritte Stufe bilden. Es versteht sich, dass die Schieberventile 68₁ und 68₂ zu einem Schieberventil zusammengefasst sein könnten, das entsprechend lang gestaltet sein müsste, oder dass die Schieberventile 66 und 68 durch jeweils zwei dem Schieberventil 64 entsprechende Schieberventile gebildet sein könnten.

Wie ohne weiteres verständlich, ist durch entsprechende Betätigung der Steuerventile 58, 60 und 62 jeder einzelne der Stellzylinder SZ1 bis SZ8 selektiv mit Druck beaufschlagbar. Wenn beispielsweise der Stellzylinder SZ1 mit Druck beaufschlagt werden soll, müssen alle Steuerventile geschlossen sein, so dass die Steuerkammern aller Schieberventile druckbeaufschlagt sind. Der Schaltzylinder SZ7 beispielsweise wird mit Systemdruck beaufschlagt, wenn die Steuerkammer des Schieberventils 64 drucklos ist, die Steuerkammer des Schieberventils 66 drucklos ist und die Steuerkammer des Schieberventils 68₁ mit Druck beaufschlagt ist.

Mit der beschriebenen Anordnung ist es somit möglich, mit lediglich drei Steuerventilen 58, 60 und 62 acht Stellzylinder selektiv anzusteuern.

Die Funktion des Druckbegrenzungsventils 50 ist folgende:

Wenn der Durchströmwiderstand des Kühlers 44 einen vorbestimmten Wert übersteigt, öffnet das Druckbegrenzungsventil 50, so dass ein Teil des Hydraulikfluids den Kühler 44 durch die Bypassleitung 48 hindurch umströmt. Da der Durchströmwiderstand des Kühlers 44 aufgrund der Viskosität des Hydraulikfluids temperaturabhängig ist, ergibt sich selbsttätig eine bedarfsangepasste Kühlung des Hydraulikfluids. Bei kaltem Hydraulikfluid ist der Rückstaudruck über den Kühler hoch. Dadurch öffnet das Druckbegrenzungsventil 50 bereits bei geringer Volumenströmung durch den Kühler. Bei heißem Hydraulikfluid dagegen, bei dem eine stärkere Kühlung des Hydraulikfluids notwendig ist, ist der Rückstaudruck über den Kühler geringer, so dass das Druckbegrenzungsventil 50 erst bei höheren Volumenströmen durch den Kühler öffnet. Mit Hilfe des Druckbegrenzungsventils 50 wird somit eine bedarfsangepasste Kühlung des Hydraulikfluids erreicht.

Die Kupplungen K1 und K2 werden über ein gemeinsames Vorsteuerschieberventil 70 angesteuert, dessen Stellung mittels eines als Proportionalventil ausgebildeten elektromagnetischen Steuerventils 72 gesteuert wird. Die Druckbeaufschlagung der Stellzylinder 14 und 16 der Kupplungen K1 und K2 erfolgt einzeln über diesen zugeordnete Schieberventile 74 und 76, durch das Vorsteuerschieberventil 70 hindurch, wobei die Stellung der Schieberventile 74 und 76 über elektromagnetische, als Proportionalventile ausgebildete Steuerventile 78 und 80 erfolgt. Die Ansteuerung der Kupplungen ist an sich bekannt und wird daher nicht im einzelnen erläutert.

Wie aus Fig. 2 weiter ersichtlich, wird mit allen Steuerventilen der in der Vorsteuerdruckleitung 52 herrschende Steuerdruck entweder unmittelbar auf die Steuerkammern der angesteuerten Schieberventile gelegt oder die Steuerkammer wird durch Öffnung des jeweiligen Steuerventils druckentlastet, wobei zwischen der Vorsteuerdruckleitung 52 und der jeweiligen Verbindungsleitung zwischen der Steuerkammer des Schieberventils 74 und 76 und dem Steuerventil 78 und 80eine Drossel angeordnet ist. Vorteilhaft strömt das durch die Rücklaufleitung 46 strömende Hydraulikfluid nicht unmittelbar in einen Vorratsbehälter zurück, sondern das aus einem Auslass 82 der Rücklaufleitung ausströmende Fluid wird zur Kühlung der Kupplungen verwendet.

In Fig. 2 ist durch die Strichpunktierung ein Gehäuse angedeutet, in dem die einzelnen Leitungspfade ausgebildet sind und in oder an dem die jeweiligen Ventile angeordnet sind. Die Elektromagnete der Steuerventile sind mit den Ausgängen der Steuereinrichtung 24 gem.
Fig. 1 verbunden. Aus dem Gehäuse bzw. der Modulbaugruppe führen Leitungen (Ausgangsleitungen 22 der Fig. 1) zu den Kupplungen, dem Kühler, den Schaltzylindern und zur Kühlung der Kupplungen heraus. Eine aus einem Hydraulikfluidvorratsbehälter führende Leitung führt zu der Pumpe 30, die als gesonderte Baugruppe an dem Gehäuse angebracht ist.

Die beschriebene Vorrichtung kann in vielfältiger Weise abgeändert werden. Das Druckregelventil 40 befindet sich vorteilhaft in unmittelbarer Nähe der Pumpe. Die Schieberventile können derart ausgebildet sein, dass ihr jeweiliger nicht mit Druck beaufschlagter Auslass zu einem Rücklauf hin offen ist. Das Vorsteuerdruckventil kann entfallen, wenn ohne Vorsteuerung gearbeitet wird.

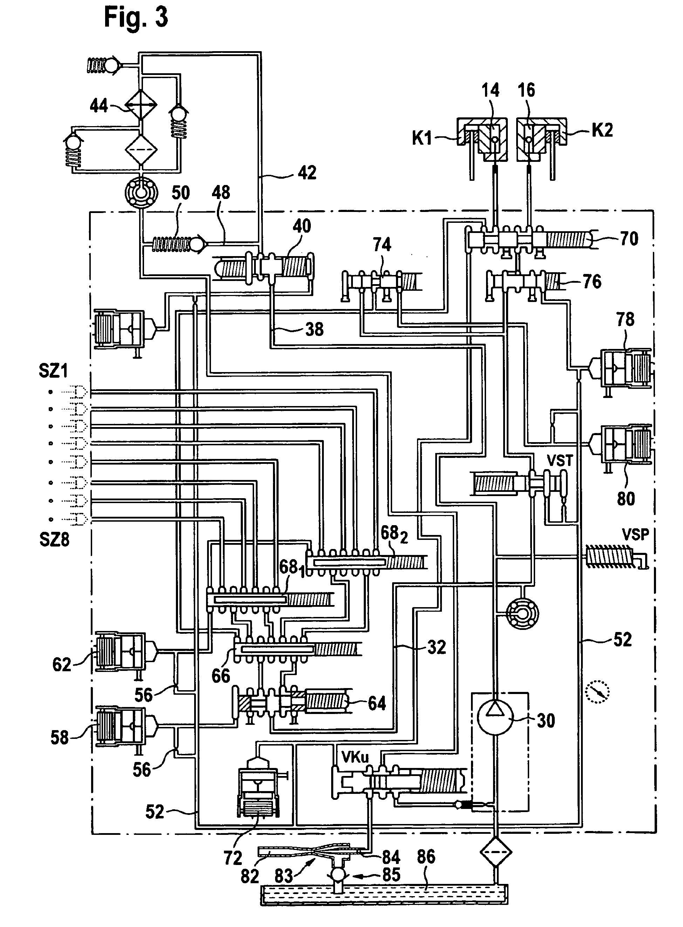

Fig. 3 zeigt eine gegenüber der Fig. 2 abgeänderte Ausführungsform des Hydrauliksystems. Die wesentliche Änderung liegt im Entfall des Steuerventils 60 und in der Ansteuerung der Steuerkammer des Schieberventils 66 unmittelbar mit dem der Kupplung K1 zugeführten Hydraulikdruck.

Wie weiter oben erläutert, besteht ein Prinzip des Doppelkupplungsgetriebes (Fig. 1) darin, die geraden Gänge im einem der Teilgetriebe und die ungeraden Gänge in dem anderen der Teilgetriebe zu verbauen. Jedem der beiden Teilgetriebe ist eine der Kupplungen K1 und K2 zugeordnet. Während beispielsweise in einem geraden Gang gefahren wird, wird der nächste oder vorhergehende ungerade Gang vorgewählt. Dies geschieht, während die Kupplung des Teilgetriebes mit den geraden Gängen geschlossen ist. Analog wird bei einer Fahrt in einem ungeraden Gang einer der geraden Gänge vorgewählt.

Wenn beispielsweise die Kupplung K1 die den geraden Gängen zugeordnete Kupplung ist, d.h. die Kupplung K1 geschlossen ist, wenn in einem geraden Gang gefahren wird, dann kann bei geschlossener Kupplung K1 nur einer der ungeraden Gänge vorgewählt werden, d.h. einer der zugehörigen Schaltzylinder betätigt werden. Wenn, wie in Fig. 3 dargestellt, der Kupplung K1 zugeführte Hydraulikfluiddruck der Steuerkammer des Schieberventils 66 zugeführt wird, befindet sich dessen Schieber in der rechten Stellung, so dass nur die beiden jeweils rechten Auslässe der Schieberventile 68₁ und 68₂ je nach Druckbeaufschlagung der Steuerkammern der Schieberventile 64 und 68₁ sowie 68₂ selektiv mit Druck beaufschlagbar sind. Somit kann einer der Schaltzylinder SZ1, SZ2 oder SZ5, SZ6 betätigt werden. Diese Schaltzylinder werden dem Getriebeteil mit ungeraden Gängen zugeordnet. Umgekehrt kann einer der anderen Schaltzylinder betätigt werden, wenn die Kupplung K1 drucklos ist.

Bei der Ausführung gemäß Fig. 3 kann somit gegenüber der der Fig. 2 ein Steuerventil eingespart werden.

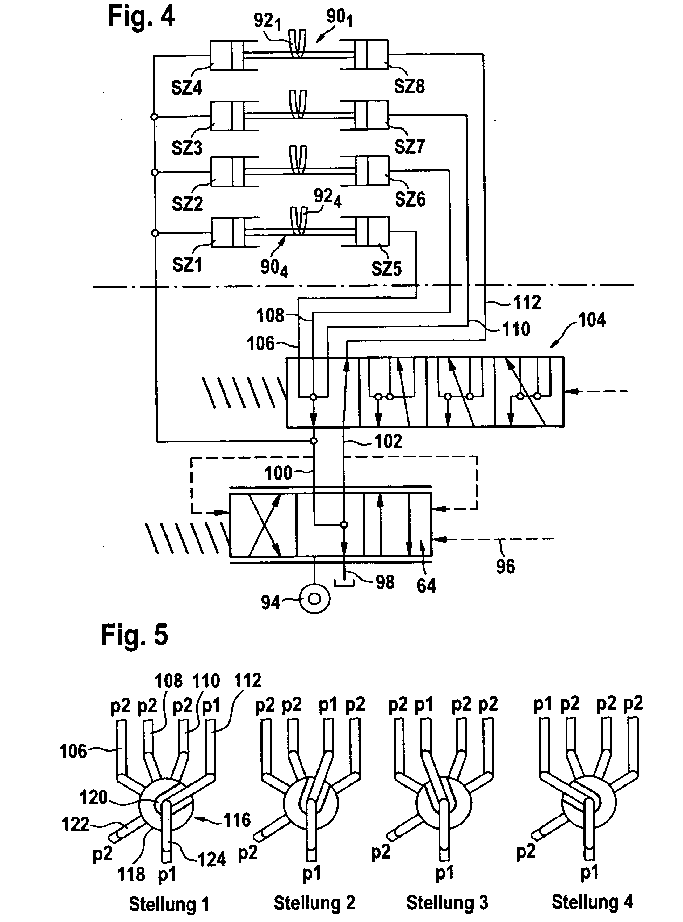

Anhand der Figuren 4 bis 8 wird im Folgenden eine erfindungsgemäße Vorrichtung zum Ansteuern einer Mehrzahl von hydraulischen Schaltzylindern erläutert. Dabei werden für zu denen der Figuren 2 und 3 ähnliche Bauteile die gleichen Bezugszeichen wie in Figuren 2 und 3 verwendet.

Gemäß Fig. 4, die ein Hydraulikkonzept der erfindungsgemäßen Vorrichtung zeigt, sind vier Schaltbaugruppen 90₁ bis 90₄ zu schalten, die jeweils zwei gegensinnig wirkende Schaltzylinder SZ1 bis SZ8 aufweisen. Jede Schaltbaugruppe 90 enthält eine Schaltgabel 92, die aus einer mittleren Neutralstellung vorteilhafterweise nach links und nach rechts verschiebbar ist.

Figur 4 zeigt eine Ausführungsform eines Steuermodus zur Steuerung der Gangbeteiligung. Hierzu ist zur Steuerung der Schaltzylinder ist ein 4/3-Wegeventil vorgesehen, das dem ersten Schieberventil 64 der Figuren 2 und 3 entspricht. Das Schieberventil 64 hat einen mit Systemdruck beaufschlagbaren Eingang 94, einen mit Steuerdruck beaufschlagbaren Steuereingang 96, einen Rücklaufausgang 98 und zwei Ausgänge 100 und 102, die je nach Druckbeaufschlagung des Steuereingangs 96 mit dem Systemdruckeingang 94 oder dem Rücklaufausgang 98 verbunden sind.

Die beiden Ausgänge 100 und 102 des ersten Schieberventils 64 sind mit einem 6/4-Wegeventil 104 verbunden, dessen Ausgänge 106, 108, 110 und 112 mit den Schaltzylindern SZ5, SZ6, SZ7 und SZ8 verbunden sind. Ein weiterer Ausgang des 6/4-Wegeventils 104, der gleichzeitig den Eingang 100 bildet, ist als ein Sammelausgang gemeinsam mit den Schaltzylindern SZ1, SZ2, SZ3 und SZ4 verbunden. Somit sind im dargestellten Beispiel die gemäß Fig. 4 nach links wirkenden Schaltzylinder mit den Einzelausgängen des 6/4-Wegeventils verbunden, wo hingegen die nach rechts wirkenden Schaltzylinder mit dem Sammelausgang verbunden sind.

Der Aufbau des 6/4-Wegeventils 104 ist derart, dass es den Systemdruck entweder auf einen der Schaltzylinder SZ5, SZ6, SZ7 und SZ8 schaltet, so dass dann die entsprechende Schaltgabel nach links verschoben wird, oder den Systemdruck auf jeweils sieben Schaltzylinder schaltet und den achten Schaltzylinder mit dem Rücklaufausgang 98 verbindet. Die zugehörige Schaltgabel wird dann nach rechts verschoben.

Ein Vorteil des dargestellten Konzepts liegt in der geringen Anzahl von Elektromagnetventilen (im dargestellten Beispiel 5) und in der Möglichkeit, die im dargestellten Beispiel acht Schaltzylinder, von dem jeweils zwei eine Schaltgabel betätigen, mit lediglich fünf Druckanschlüssen zu steuern.

Fig. 5 zeigt ein als 6/4-Wegeventil geeignetes, in seinem Aufbau einfaches, insgesamt mit 116 bezeichnetes Drehschieberventil in vier unterschiedlichen Stellungen. Das Drehschieberventil 116 weist ein Gehäuse 118 auf, innerhalb dessen ein Drehschieber 120 drehbar angeordnet ist. Das Gehause weist weiter insgesamt sechs Anschlüsse auf, von denen die gemaß Fig. 5 oberen vier den Ausgängen 106, 108, 110 und 112 entsprechen, ein weiterer Ausgang dem mit dem Ausgang 100 des Schieberventils 64 der Fig. 4 verbundenen Eingang bzw. Sammelausgang 122 entspricht, und ein weiterer Anschluss einen Eingang 124 bildet, der mit dem Ausgang 102 des Schieberventils 64 der Fig. 4 verbunden ist.

Der Drehschieber 120 ist in die in Fig. 5 dargestellten vier unterschiedlichen Stellungen drehbar, in denen er den Eingang 124 selektiv mit einem der Ausgänge 106, 108, 110 und 112 verbindet. Mit P1 ist in Fig. 5 beispielsweise ein dem Systemdruck entsprechendes Druckniveau bezeichnet, mit P2 ist ein weitgehend druckloser, mit dem Rücklaufanschluss 98 verbundener, Druckzustand bezeichnet. Das Druckniveau P2 muss nicht Null sein; wichtig ist, dass die beiden Druckniveaus verschieden sind.

Wie unmittelbar ersichtlich, ist in den vier dargestellten Stellungen jeweils einer der Schaltzylinder SZ5 bis SZ8 (Fig. 4) mit dem Systemdruck P1 beaufschlagt, wo hingegen jeweils alle anderen sieben Schaltzylinder mit dem im dargestellten Beispiel niedrigeren Druck P2 beaufschlagt sind bzw. drucklos sind.

Wenn durch Umschalten des Schieberventils 64 der Eingang 124 mit dem Rücklaufausgang 98 verbunden ist und der Eingang 122 mit dem Systemdruck beaufschlagt ist, kehren sich die Verhältnisse um; jeweils einer der Schaltzylinder SZ5 bis SZ8 ist mit niederem Druck beaufschlagt, wo hingegen alle anderen Schaltzylinder mit Systemdruck beaufschlagt sind.

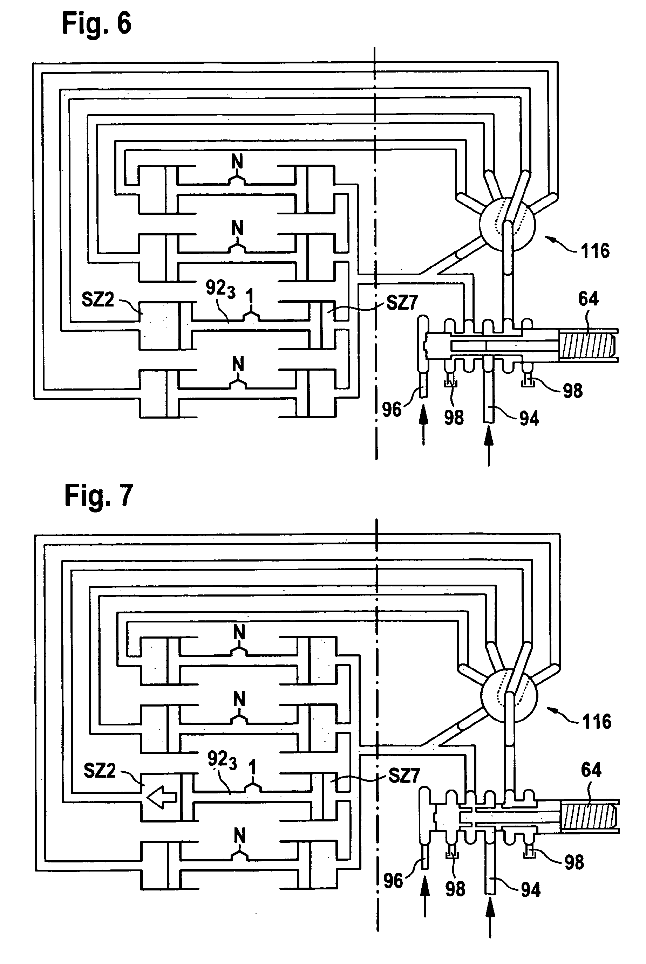

Die Figuren 6 und 7 stellen die geschilderten Verhältnisse beispielhaft dar.

Im dargestellten Beispiel ist in den Stellungen gemäß Fig. 6 der Schaltzylinder 2 mit Systemdruck beaufschlagt, wo hingegen alle anderen Schaltzylinder drucklos sind. Dies führt dazu, dass im dargestellten Beispiel der Schaltzylinder 2 die Schaltgabel 92₃ nach rechts bewegt, so dass im dargestellten Beispiel der erste Gang eines Doppelkupplungsgetriebes eingelegt wird. Die Schaltzylinder der anderen Betätigungsbaugruppen sind jeweils mit dem gleichen, niederen Druck beaufschlagt, so dass sich die jeweiligen Schaltgabeln in Neutralstellung befinden.

Im Zustand der Fig. 7 ist das Schieberventil 64 umgeschaltet, so dass der Schaltzylinder SZ2 nunmehr auf niederem Druck ist und der Schaltzylinder SZ7 gemeinsam mit den restlichen Schaltzylindern sich auf Systemdruck befindet. Die Schaltgabel 92₃ wird zum Auslegen des ersten Ganges nach links bewegt. Die Schaltzylinder der anderen Schaltbaugruppen sind mit dem gleichen hohen Systemdruck beaufschlagt, so dass sich deren Schaltgabeln in Neutralstellung befinden.

Ein Drehschieberventil, wie das ein 6/4-Wegeventil bildende Drehschieberventil 116, ist beispielsweise mittels eines Schrittschaltmotors einfach betätigbar, wobei die jeweiligen Endstellungen (Stellungen 1 und 4 der Fig. 5) Anschlagstellungen sein können und die Zwischenstellungen gesteuert oder geregelt angefahren werden und vorteilhafterweise überwacht werden. Durch Verwendung eines Schrittmotors können zusätzlich Positions- oder Wegesensoren für die Einstellung der Stellungen 2 und 3 vermieden werden.

Eine weitere Möglichkeit, den Drehschieber 120 zu verdrehen, besteht in der Kombination eines Elektromagnetventils mit einem Axialschieber.

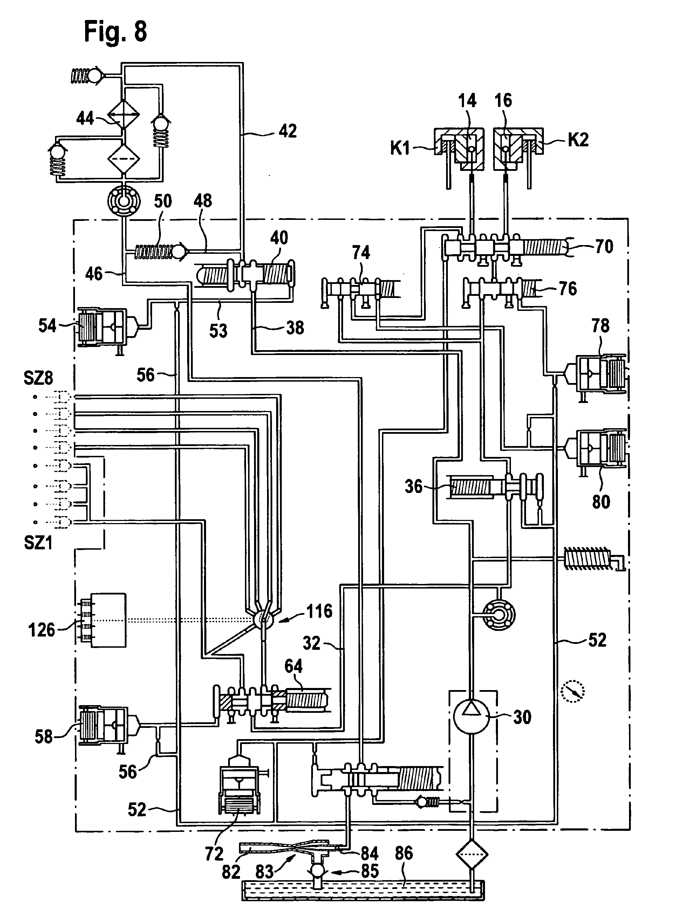

Fig. 8 zeigt einen der Darstellungen der Fig. 2 entsprechenden Gesamthydraulikplan mit Verwendung des Drehschieberventils 116. Wie ersichtlich, tritt das von einem Schrittmotor 126 gesteuerte Drehschieberventil 116 anstelle der Schieberventile 66 und 68 der Fig. 3.

Gemäß einer weiteren erfinderischen Ausgestaltung können die Reibflächen eines Doppelkupplungsgetriebes mittels eines Kühlmittelstroms gekühlt werden, wobei der Kühlmittelstrom aus einem druckbeaufschlagten Anteil und einem mittels einer Strahlpumpe aus dem Sumpf angesaugten Anteil bestehen kann. Hierzu ist in den Figuren 2, 3 und 8 eine derartige Strahlpumpe 83 schematisch dargestellt, die durch einen Druckzufluss 84 gespeist wird und Kühlmittel über einen Auslass 82 und entsprechende Zuleitungen zu den Reibbelägen der Kupplungen K1 und K2 befördert wird, wobei in Abhängigkeit von dem einstellbaren Volumenstrom über die Zuleitung 84 entgegen der Wirkung des Rückschlagventils 85 zusätzlich Kühlmittel aus dem Sumpf 86 angesaugt wird. Die Einstellung des Volumenstroms über die Zuleitung 84 kann dabei abhängig von der Reibleistung der Kupplungen K1, K2 erfolgen. Als Parameter zur Bestimmung der Reibleistung kann beispielsweise der Schlupf der Kupplungen, das übertragene Drehmoment, die Temperatur des von den Kupplungen zurückfließenden Kühlmittels und dergleichen herangezogen werden.

### Bezugszeichenliste

- 6: Antriebswelle
- 8: Eingangswelle
- 10: Eingangswelle
- 12: Ausgangswelle
- 14: Stellzylinder
- 16: Stellzylinder
- 17: Teilgetriebe
- 18: Teilgetriebe
- 20: Elektrohydraulikbaugruppe
- 22: Ausgangsleitungen
- 24: Steuereinrichtung
- 26: Eingänge
- 30: Pumpe
- 32: Leitung
- 36: Vorsteuerdruckventil
- 38: Leitung
- 40: Druckregelventil
- 42: Kühlleitung
- 44: Kühler
- 46: Rücklaufleitung
- 48: Bypassleitung
- 50: Druckbegrenzungsventil
- 52: Vorsteuerdruckleitung
- 53: Leitung
- 54: Steuerventil
- 56: Drossel
- 58: Steuerventil
- 60: Steuerventil
- 62: Steuerventil
- 64: Schieberventil
- 66: Schieberventil
- 68: Schieberventil
- 68₁: Schieberventil
- 68₂: Schieberventil
- 70: Vorsteuerschieberventil
- 72: Steuerventil
- 74: Schieberventil
- 76: Steuerventil
- 78: Steuerventil
- 80: Steuerventil
- 82: Auslass
- 83: Strahlpumpe
- 84: Zuleitung
- 85: Rückschlagventil
- 86: Sumpf
- 90: Schaltbaugruppe
- 90₁: Schaltbaugruppe
- 90₂: Schaltbaugruppe
- 90₃: Schaltbaugruppe
- 90₄: Schaltbaugruppe
- 92₁: Schaltgabel
- 92₂: Schaltgabel
- 92₃: Schaltgabel
- 92₄: Schaltgabel
- 94: Systemdruckeingang
- 96: Steuereingang
- 98: Rücklaufausgang
- 100: Ausgang
- 102: Ausgang
- 104: 6/4-Wegeventil
- 106: Ausgang
- 108: Ausgang
- 110: Ausgang
- 112: Ausgang
- 116: Drehschieberventil
- 118: Gehäuse
- 120: Drehschieber
- 122: Ausgang zu Schaltventilen SZ5-SZ8
- 124: Eingang
- 126: Schrittmotor
- K1: Kupplung
- K2: Kupplung
- SZ1: Schaltzylinder
- SZ2: Schaltzylinder
- SZ3: Schaltzylinder
- SZ4: Schaltzylinder
- SZ5: Schaltzylinder
- SZ6: Schaltzylinder
- SZ7: Schaltzylinder
- SZ8: Schaltzylinder
- P1: Systemdruck
- P2: Tankdruck

## Patentansprüche

1. Vorrichtung zum Ansteuern einer Mehrzahl von hydraulischen Schaltzylindern (SZ1-SZ8), insbesondere Schaltzylindern zum Schalten von Gängen eines Doppelkupplungsgetriebes, enthaltend ein erstes Schieberventil (64) mit einem mit Steuerdruck beaufschlagbaren Steuereingang (96), einem mit Systemdruck beaufschlagbaren Systemdruckeingang (94), zwei Ausgängen (100, 102) und wenigstens einem Rücklaufausgang (98), wobei in Abhängigkeit von dem am Steuereingang liegenden Druck wahlweise der eine Ausgang mit dem Systemdruckeingang und der andere Ausgang mit dem Rücklaufausgang verbunden ist, und eine an die Ausgänge des Schieberventils angeschlossene Ventileinrichtung (66, 68; 104; 116), mittels der die Schaltzylinder selektiv betätigbar sind, **dadurch gekennzeichnet, dass** je zwei Schaltzylinder gegensinnig wirkend in einer Schaltbaugruppe (90) mit je einem Schaltglied (92) zusammengefasst sind,
die Ventileinrichtung ein mit Steuerdruck beaufschlagbares Mehrwegeventil (104; 116) mit je einem der Schaltzylinder einer Schaltbaugruppe zugeordneten Einzelausgängen (106, 108, 110, 112) und einem den jeweils anderen der Schaltzylinder der Betätigungsbaugruppen gemeinsam zugeordneten Sammelausgang (122) enthält, und das Mehrwegeventil je nach Stellung des ersten Schieberventils (64) den Systemdruck selektiv auf einen der Einzelausgänge leitet und dabei alle anderen Schaltzylinder mit dem Rücklaufausgang verbindet oder selektiv einen der Einzelausgängen mit dem Rücklaufausgang verbindet und dabei alle anderen Ausgänge mit dem Systemdruck beaufschlagt.

2. Vorrichtung nach Anspruch 1, wobei wenigstens einige der Steuereinrichtungen durch elektromagnetisch betätigbare Steuerventile (58) gebildet sind.

3. Vorrichtung nach Anspruch 2, wobei eine Vorsteuerdruckleitung (52) über eine Drossel (56) mit einer Verbindungsleitung zwischen einem Steuerventil (58) und einer Steuerkammer eines Schieberventils (64) verbunden ist.

4. Vorrichtung nach Anspruch 1, wobei das Mehrwegeventil ein Drehschieberventil (116) ist, dessen Drehschieber (120) selektiv einen mit einem Ausgang des ersten Schieberventils (64) verbundenen Eingang mit einem der Einzelausgänge (106, 108, 110, 112) verbindet und dessen Sammelausgang (122) gleichzeitig den anderen, mit dem anderen Ausgang des ersten Schieberventils verbundenen Eingang des Drehschieberventils bildet.

5. Hydraulikversorgungssystem für ein Doppelkupplungsgetriebe, enthaltend eine Vorrichtung nach einem der Ansprüche 1 bis 4, enthaltend
eine von einer Pumpe (30) mit Druck beaufschlagbare Leitung (38), die an ein Druckregelventil (40) angeschlossen ist, das einen Anschluss für mit der oder den Steuereinrichtungen (58, 60, 62) verbundene Vorsteuerdruckleitung (52) und einen Rücklaufanschluss aufweist, der über eine durch einen Kühler (44) führende Kühlleitung (42) mit einer Rücklaufleitung (46) verbunden ist,
eine Bypassleitung (48), die die Kühlleitung mit der Rücklaufleitung verbindet, und
ein in der Bypassleitung angeordnetes Druckbegrenzungsventil (50), das den Durchströmquerschnitt der Bypassleitung bei zunehmendem Staudruck am Kühler zunehmend öffnet.

6. Hydrauliksystem nach Anspruch 5, wobei zumindest ein Teil des durch die Rücklaufleitung strömenden Hydraulikfluids zur Kühlung der Kupplungen (K1, K2) verwendet wird.

7. Vorrichtung nach Anspruch 6, **dadurch gekennzeichnet, dass** eine mit Druckmittel beaufschlagte Leitung (84) vor der Zuführung zu einem drucklosen Sumpf (86) unter Zwischenschaltung einer Strahlpumpe (83) zumindest einer Kupplung (K1, K2) zur Kühlung zugeführt wird, wobei die Strahlpumpe (83) in Abhängigkeit von dem in der Leitung (84) transportierten Volumenstrom des Druckmittel entgegen der Wirkung eines mit dem Sumpf (86) verbundenen Rückschlagventils (85) vom Sumpf (86) zusätzliches Kühlmittel zur Kühlung der zumindest einen Kupplung (K1, K2) ansaugt.

## Claims

1. Device for activating a plurality of hydraulic shift cylinders (SZ1-SZ8), in particular shift cylinders for the shifting of gears of a dual clutch transmission, containing a first slide valve (64) with a control inlet (96) capable of being acted upon by control pressure, with a system-pressure inlet (94) capable of being acted upon by system pressure, with two outlets (100, 102) and with at least one return outlet (98), selectively one outlet being connected to the system-pressure inlet and the other outlet being connected to the return outlet as a function of the pressure prevailing at the control inlet, and a valve arrangement (66, 68; 104; 116) which is connected to the outlets of the slide valve and by means of which the shift cylinders can be actuated selectively, **characterized in that** in each case two shift cylinders are combined, acting contradirectionally, in a shift subassembly (90) having in each case a shift member (92), the valve arrangement contains a multiple-way valve (104; 116) capable of being acted upon by control pressure, with individual outlets (106, 108, 110, 112) assigned in each case to one of the shift cylinders of a shift subassembly and with a collecting outlet (122) assigned jointly in each case to the other shift cylinders of the actuation subassemblies, and, depending on the position of the first slide valve (64), the multiple-way valve conducts the system pressure selectively to one of the individual outlets and in this case connects all the other shift cylinders to the return outlet or selectively connects one of the individual outlets to the return outlet and in this case acts with the system pressure upon all the other outlets.

2. Device according to Claim 1, at least some of the control arrangements being formed by electromagnetically actuable control valves (58).

3. Device according to Claim 2, a pilot-control pressure line (52) being connected via a throttle (56) to a connecting line between a control valve (58) and a control chamber of a slide valve (64).

4. Device according to Claim 1, the multiple-way valve being a rotary slide valve (116), the rotary slide (120) of which selectively connects an inlet connected to an outlet of the first slide valve (64) to one of the individual outlets (106, 108, 110, 112) and the collecting outlet (122) of which simultaneously forms that other inlet of the rotary slide valve which is connected to the other outlet of the first slide valve.

5. Hydraulic supply system for a dual clutch transmission, containing a device according to one of Claims 1 to 4, containing a line (38) which can be acted upon by pressure from a pump (30) and which is connected to a pressure-regulating valve (40) which has a connection for the pilot-control pressure line (52) connected to the control arrangement or control arrangements (58, 60, 62) and a return connection which is connected to a return line (46) via a cooling line (42) leading through a cooler (44), a bypass line (48) which connects the cooling line to the return line, and a pressure-limiting valve (50) which is arranged in the bypass line and which increasingly opens the throughflow cross section of the bypass line in the case of an increasing dynamic pressure at the cooler.

6. Hydraulic system according to Claim 5, at least part of the hydraulic fluid which flows through the return line being used for cooling the clutches (K1, K2).

7. Device according to Claim 6, **characterized in that** a line (84) acted upon by pressure medium, before being led to a pressureless sump (86), is led, with a jet pump (83) interposed, to at least one clutch (K1, K2) for cooling purposes, the jet pump (83) sucking in additional coolant from the sump (86), for cooling the at least one clutch (K1, K2), counter to the action of a non-return valve (85) connected to the sump (86), as a function of the volume flow of pressure medium transported in the line (84).

## Revendications

1. Dispositif de commande de plusieurs cylindres de passage (SZ1-SZ8), hydrauliques, notamment des cylindres de passage pour passer les vitesses d'une boîte à double embrayage, comprenant une première soupape à tiroir (64) dotée d'une entrée de commande (96) alimentée en pression de commande, d'une entrée de pression du système (94) alimentée en pression du système, de deux sorties (100, 102) et d'au moins une sortie de retour (98), la première sortie étant reliée au choix à l'entrée de pression du système et l'autre sortie à la sortie de retour en fonction de la pression régnant au niveau de l'entrée de commande, et un dispositif de soupape (66, 68 ; 104 ; 116) raccordé au niveau des sorties de la soupape à tiroir pouvant être actionné de façon sélective à l'aide du cylindre de passage, **caractérisé en ce que** respectivement deux cylindres de passage à effet opposé sont réunis dans un groupe de changement de vitesse (90) doté respectivement d'un élément de changement de vitesse (92), le dispositif de soupape contenant une soupape à plusieurs voies (104 ; 116) pouvant être alimentée respectivement en pression de commande avec respectivement une des sorties individuelles (106, 108, 110, 112) associées aux cylindres de passage d'un groupe de changement de vitesse et une sortie commune (122) associée conjointement aux autres cylindres de passage du groupe d'actionnement, et la soupape à plusieurs voies dirigeant de façon sélective la pression du système en fonction de la position de la première soupape à tiroir (64) sur une des sorties individuelles et reliant ainsi tous les autres cylindres de passage à la sortie de retour ou reliant de façon sélective une des sorties individuelles à la sortie de retour et alimentant ainsi toutes les autres sorties en pression du système.

2. Dispositif selon la revendication 1, au moins quelques dispositifs de commande étant formés par des soupapes de commande (58) pouvant être actionnées de façon électromagnétique.

3. Dispositif selon la revendication 2, une conduite de pression de pré-commande (52) étant reliée à une conduite de jonction réalisée entre une soupape de commande (58) et une chambre de commande d'une soupape à tiroir (64) par l'intermédiaire d'un étranglement (56).

4. Dispositif selon la revendication 1, la soupape à plusieurs voies étant une soupape à tiroir rotatif (116) dont le tiroir rotatif (120) relie de façon sélective une entrée reliée à une sortie de la première soupape à tiroir (64) à une des sorties individuelles (106, 108, 110, 112) et dont la sortie commune (122) forme en même temps l'autre entrée de la soupape à tiroir rotatif reliée à l'autre sortie de la première soupape à tiroir.

5. Système d'alimentation hydraulique pour une boîte à double engrenage, comprenant un dispositif selon l'une quelconque des revendications 1 à 4, comprenant
une conduite (38) pouvant être alimentée en pression par une pompe (30) et raccordée à une soupape de régulation de pression (40) qui comporte un raccord pour la conduite de pression de pré-commande (52) reliée au ou aux dispositifs de commande (58, 60, 62) et un raccord de retour relié à une conduite de retour (46) par l'intermédiaire d'une conduite de refroidissement (42) conduisant à un dispositif de refroidissement (44),
une conduite de dérivation (48) qui relie la conduite de refroidissement à la conduite de retour et
une soupape de limitation de pression (50) disposée dans la conduite de dérivation qui ouvre de façon croissante la section transversale d'écoulement de la conduite de dérivation à mesure que la pression de retenue augmente au niveau du dispositif de refroidissement.

6. Système hydraulique selon la revendication 5, une partie au moins du fluide hydraulique circulant à travers la conduite de retour étant utilisée pour refroidir les embrayages (K1, K2).

7. Dispositif selon la revendication 6, **caractérisé en ce qu'**une conduite (84) alimentée en agent de pression est amenée à au moins un embrayage (K1, K2) à des fins de refroidissement avant l'arrivée à un bassin (86) sans pression en intercalant une pompe à jet (83), la pompe à jet (83) réalisant son aspiration dans le bassin (86) en allant contre l'effet d'une soupape de retour (85) reliée au bassin (86) de l'agent de refroidissement supplémentaire en fonction du débit d'agent de pression transporté dans la conduite (84) pour refroidir l'au moins un embrayage (K1, K2).
